(19) Europäisches Patentamt
European Patent Office
Office européen des brevets

(11) EP 1 312 624 A1

(12) EUROPEAN PATENT APPLICATION

(43) Date of publication:
**21.05.2003 Bulletin 2003/21**

(51) Int Cl.[7]: **C08F 210/16**, C08J 5/18, C08F 4/64

(21) Application number: **01204358.4**

(22) Date of filing: **14.11.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Atofina Research S.A.**
**7181 Seneffe (Feluy) (BE)**

(72) Inventor: **Marechal, Philippe**
**1400 Nivelles (BE)**

# (54) Metallocene film resin

(57) Linear low density polyethylene resin produced with a metallocene or a late transition metal catalyst and having a density of from 0.906 to 0.940 g/cm$^3$, a melt index MI2 of from 0.001 to 150 g/10 min, a DRI larger than 20/MI2 and a molecular weight distribution of less than 4.

EP 1 312 624 A1

## Description

This invention relates to metallocene-produced linear low density polyethylene having good mechanical properties, excellent optical properties and very good extrusion potential when used pure.

The currently available polyethylene resins all suffer from major drawbacks.

The low density polyethylene (LDPE) resins have excellent processing properties, good optical properties and good sealing properties but have poor mechanical properties and poor rigidity.

Conventional linear low density polyethylene (LLDPE) resins have good mechanical properties, but they have mediocre optical properties, poor sealing properties and poor processability.

Metallocene-produced linear low polyethylene (mLLDPE) resins have very good mechanical properties, but they suffer from very poor processing capabilities. If mixed with LDPE they have very good optical and good sealing properties, but the mechanical properties are reduced.

WO 95/27005 relates to mixtures of LDPE with LLDPE or metallocene-catalysed LLDPE (mLLDPE) and films thereof. Those films exhibit a better haze, however the dart impact was reduced when compared to pure LLDPE or mLLDPE films.

In addition, most metallocene-produced polyethylenes known in the art suffer from poor processing and are imposssible to blow on general purpose blown film lines: they require specialised equipment with wide die gap and dual lip stabilisation. Good extrudability is generally obtained from resins having a broad molecular weight distribution, but this kind of resin lacks good optical properties.

There is thus a need for a polyethylene resin having a good balance of optical and mechanical properties as well as good processing capabilities on most blown film lines.

Accordingly it is an aim of the present invention to provide a polyethylene resin having a good balance of optical and mechanical properties.

It is another aim of the present invention to provide a polyethylene resin having good extrudability on all conventional blown film lines designed for low density polyethylene, linear low density polyethylene and their blends, or even on lines designed for high density polyethylene for extruding blown film balloons and presenting a neck.

It is a further aim of the present invention to provide a polyethylene resin having good sealing properties.

It is yet another aim of the present invention to provide a polyethylene resin having good shrink properties.

The present invention relates to a linear low density polyethylene (mLLDPE) resin produced preferably with a metallocene or a late transition metal catalyst and having a density of from 0.906 to 0.940 g/cm$^3$, a melt index MI2 of from 0.001 to 150 g/10 min, a DRI larger than 5/MI2 and a molecular weight distribution of less than 4.5.

In this specification, the density is measured at 23 °C following the method of standard test ASTM D 1505. The density of the mLLDPE is of from 0.906 to 0.940 g/cm$^3$, preferably of from 0.910 to 0.926 g/cm$^3$ and most preferably of from 0.914 to 0.925 g/cm$^3$.

The MI2 and HLMI are measured at a temperature of 190 °C following the method of standard test ASTM D 1238 respectively under loads of 2.16 kg and 21.6 kg. The MI2 of the mLLDPE is of from 0.001 to 150 g/10 min, preferably of from 0.01 to 50 g/10 min and most preferably of from 0.1 to 10 g/10 min.

The metallocene-produced linear low density polyethylene resins has a high Dow Rheological Index (DRI). To characterize the rheological behavior of substantially linear ethylene polymers, S Lai and G.W. Knight introduced ( ANTEC '93 Proceedings, Insite™ Technology Polyolefins (ITP)-New Rules in the Structure/Rheology Relationship of Ethylene &-Olefin Copolymers, New Orleans, La., May 1993) a new rheological measurement, the Dow Rheology Index (DRI) which expresses a polymer's "normalized relaxation time as the result of long chain branching". S.Lai et al; ( Antec '94, Dow Rheology Index (DRI) for Insite™ Technology Polyolefins (ITP): Unique structure-Processing Relationships, pp. 1814-1815) defined the DRI as the extent to which the rheology of ethylene-octene copolymers known as ITP ( Dow's Insite Technology Polyolefins) incorporating long chain branches into the polymer backbone deviates from the rheology of the conventional linear homogeneous polyolefins that are reported to have no Long Chain Branches (LCB) by the following normalized equation:

$$DRI = (365000\ (t_0/\eta_0)-1)/10$$

wherein $t_0$ is the characteristic relaxation time of the material and $\eta_0$ is the zero shear viscosity of the material. The DRI is calculated by least squares fit of the rheological curve (complex viscosity versus frequency) as described in US-6,114,486 with the following generalized Cross equation, i.e.

$$\eta = \eta_0/(1+(\gamma\, t_0)^n)$$

wherein n is the power law index of the material, η and y are the measured viscosity and shear rate data respectively. The dynamic rheological analysis was performed at 190°C and the strain amplitude was 10%. Results are reported according to ASTM D 4440. The DRI of the mLLDPE is larger than 5/MI2, preferably it is larger than 20/MI2 and most preferably it is larger than 30/MI2.

The molecular weight (MWD) distribution can be completely defined by means of a curve obtained by gel permeation chromatography. Generally the molecular weight distribution is more simply defined by a parameter known as the dispersion index D, which is the ratio between the average molecular weight by weight (Mw) and the average molecular weight by number (Mn). The dispersion index constitutes a measure of the width of the molecular weight distribution. The molecular weight distribution of the mLLDPE is of less than 4.5, preferably of less than 4 and most preferably of from 2.1 to 3.5.

The high DRI mLLDPE resins according to the present invention further have a low activation energy, similar to that of conventional LLDPE resins and they have a branching index of about 1.

The present invention further provides a process for preparing a linear low density polyethylene resin that comprises the steps of:

a) providing a metallocene or a late transition metal catalyst component;
b) activating the catalyst component of step a) with a cocatalyst having an ionising action;
c) providing a metal alkyl cocatalyst having a scavenging action;
d) adding the ethylene and a comonomer to the reaction zone;
e) retrieving the mLLDPE.

The metallocene component can be any metallocene component known in the art of the general formula:

I. $(Cp)_mMR_nX_q$
wherein Cp is a cyclopentadienyl ring, M is a group 4b, 5b or 6b transition metal, R is a hydrocarbyl group or hydrocarboxy having from 1 to 20 carbon atoms, X is a halogen, and m-1-3, n=0-3, q=0-3 and the sum m+n+q is equal to the oxidation state of the metal.

II. $(C_5R'_k)_g\ R''_s\ (C_5R'_k)\ MQ_{3-g}$

III. $R''_s(C_5R'_k)_2MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

Among the preferred metallocenes used in the present invention, one can cite among others bis tetrahydro-indenyl compounds and bis indenyl compounds as disclosed for example in WO 96/35729. The most preferred metallocene catalyst is ethylene bis (4,5,6,7-tetrahydro-1-indenyl) zirconium dichloride.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition of a cocatalyst having an ionising action creates an active site. Among the preferred avtivating cocatalysts, one can cite alumoxane and triphenylcarbenium boronate.

Preferably, alumoxane is used as cocatalyst during the polymerization procedure, and any alumoxane known in the art is suitable.

The preferred alumoxanes comprise oligomeric linear and/or cyclic alkyl alumoxanes represented by the formula :

$$(IV)\ R\text{-}(\underset{\displaystyle R}{\underset{|}{Al}}\text{-}O)_n\text{-}AlR_2$$

for oligomeric, linear alumoxanes and

$$\text{(V)}\ (\text{-}\underset{\substack{|\\ R}}{Al}\text{-O-})_m$$

for oligomeric, cyclic alumoxanes,
wherein n is 1-40, preferably 10-20, m is 3-40, preferably 3-20 and R is a $C_1$-$C_8$ alkyl group and preferably methyl.

Methylalumoxane is preferably used.

The other metal alkyl cocatalyst is a scavenger. It is preferably an aluminium alkyl represented by the formula $AlR_X$ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL). The amount of scavenger is preferably of less than 1000 ppm and more preferably of less than 100 ppm.

The polymerisation of the metallocene-produced linear low density polyethylene can be carried out in gas, solution or slurry phase. Slurry polymerisation is preferred for the production of the mLLDPE of the present invention. The diluent is preferably isobutane or supercritical propylene. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours.

The polymerisation can be carried out in several serially connected reactors. A continuous single loop reactor is preferably used for conducting the polymerisation under quasi steady state conditions.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.02 to 3 mole percent hydrogen and from 99.98 to 97 mole percent olefin.

The melt index of polyethylene is regulated by the amount of hydrogen injected into the reactor.

The density of the polyethylene is regulated by the amount of comonomer injected into the reactor; examples of comonomer which can be used include 1-olefins, typically olefins having from 3 to 20 carbon atoms or non-conjugated di-olefins. Preferably the comonomer is an olefin having from 3 to 18 carbon atoms, more preferably from 3 to 14 carbon atoms and most preferably, it is hexene.

The amount of comonomer is of from 1 to 24 wt% based on the weight of the polyethylene, more preferably it is of from 3 to 14 wt% and most preferably it is of from 3 to 9 wt%.

The present invention further provides films prepared with the mLLDPE of the present invention. These films are characterised by excellent optical properties, good shrink properties and outstanding sealing performances and their mechanical properties are in line with those of films produced from other commercial resins. In addition the resin has excellent extrusion capabilities thereby allowing high flexibility for use either on conventional blown film lines or on high density polyethylene (HDPE) blown film lines extruding with a neck, or on coextrusion lines, or on flat die extruders such as cast lines.

The resins according to the present invention can be used in numerous applications such as for example:

- shrink films because of the excellent shrink properties,
- Form Feel Seal (FFS) packaging because of the broad hot tack range,
- heavy duty sacks because of the excellent mechanical properties,
- optical films for food packaging or bag in box, or others, because of the good optical properties,
- irregular shape packaging because of the outstanding resistance to puncture,
- external layer of co-extrusion structure for bringing sealing performance, puncture resistance or optical properties,
- deep-freeze packaging because of the the optical and impact properties;
- industrial liners and liquid packaging because of the sealing performances that improve the packaging reliability;
- pouches because of the high ESCR and the excellent sealing performances;
- hygiene films, lamination films, protective films, various bags such as for example retail bags, trash bags self-serve bags because of the combination of sealing and mechanical properties and because of the extrusion performance;
- modified atmospheric packaging (MAP) because of the good sealing performance and optical properties;
- cast stretch films because of the high down-gauging potential and the good mechanical properties;
- very thin films because of the excellent combination of properties;
- increased extrusion output in blown film plants because of the low extrusion pressure;
- reduction of the off-specification films and reduction of scraps because of the very good extrusion stability.

The present invention can be illustrated by way of examples.

**Examples.**

Several resins have been prepared:

Resin R1 is a linear low density polyethylene prepared with ethylene bis (4,5,6,7-tetrahydro-1-indenyl) zirconium dichloride as follows. The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 94 wt% of the $SiO_2$.MAO produced in the first step with 6 wt% of ethylene bis-(tetrahydroindenyl) zirconium dichloride. The dry catalyst was slurried in isobutane and pre-contacted with triisobutylaluminium (TiBAl, 10 wt% in hexane) before injection in the reactor. The reaction was conducted in a 70 l capacity loop reactor. The operating conditions are summarised in Table I.

Resin R2 was produced following the same procedure as resin R1, but the conditions were modified to produce lower densities. These operating conditions are also summarised in Table I.

TABLE I.

| Resin | R1 | R2 |
|---|---|---|
| Temperature (°C) | 80 | 80 |
| Ethylene (wt%) | 6.1 | 4 |
| Hexene (wt%) | 0.003 | 2.8 |
| Hydrogen (vol%) | 0.003 | 0.005 |
| TIBAl (ppm) | 150 | 300 |

Comparative resin R4 is a commercially available mLLDPE sold by Phillips under the name ®Marlex mPact D139.
Comparative resin R5 is a commercially available mLLDPE sold by Basell under the name ®Luflexen 18P FAX.
Comparative resin R6 is a commercial LLDPE sold by Polimeri under the name Clearflex®: it is prepared with a Ziegler-Natta catalyst and with a C6 comonomer.
The properties of the resins R1 to R6 are summarised in Table II.

TABLE II.

| Resin | Density (g/cm$^3$) | MI2 (g/10 min) | HLMI (g/10 min) |
|---|---|---|---|
| R1 | 0.923 | 1.1 | 29.6 |
| R2 | 0.917 | 1.08 | 27.0 |
| R4 | 0.920 | 1.06 | 16.3 |
| R5 | 0.920 | 1.06 | 17.0 |
| R6 | 0.920 | 0.93 | 26.5 |

The metallocene-produced resins R1 to R5 are all characterised by a narrow molecular weight distribution, whereas the resin R6 has a slightly broader molecular weight distribution. The GPC parameters are displayed in Table III.

TABLE III.

| Resin | Mn | Mw | Mz | D |
|---|---|---|---|---|
| R1 | 31.2 | 80 | 162 | 2.6 |
| R2 | 35.8 | 87 | 192 | 2.4 |
| R4 | 36.9 | 94 | 198 | 2.5 |

TABLE III. (continued)

| Resin | Mn | Mw | Mz | D |
|---|---|---|---|---|
| R5 | 33.1 | 95 | 197 | 2.9 |
| R6 | 27.1 | 112 | 382 | 3.4 |

The rheology of the resins was determined from the complex viscosity curve. Figure 1 represents the complex viscosity expressed in Pa.s as a function of the frequency in rad/s for the resins R1 to R6.

From this figure it is observed that the resins R1 and R2 have a very high shear thinning at low shear, indicative of a high zero shear viscosity ($\eta_0$). They also have a low weight average molecular weight (Mw), related to the zero shear viscosity by the equation

$$\eta_0 = Mw^{3.4}$$

A consequence of the high shear thinning at low shear is excellent bubble stability in blown film production.

All the resins were used for film production. The films were extruded on a Macchi line under classical linear low density conditions with a wide die gap. These conditions are summarised in Table IV.

TABLE IV.

| | |
|---|---|
| Die gap (mm) | 2.2 |
| Temperature zone 1 (°C) | 190 |
| Temperature zone 2 (°C) | 200 |
| Temperature zone 3 (°C) | 210 |
| Temperature before filter (°C) | 215 |
| Temperature after filter (°C) | 200 |
| Temperature at the die (°C) | 200-200-200 |
| Target film thickness (microns) | 40 and 25 |

The screw had a diameter of 45 mm with a length over diameter ratio L/D of 30 and a compression ration of 1.5:1. It was equipped with a Maddock mixer near the end.

The extruder screw speed was set at 100 rpm. The resin throughput was measured independently. The drawing speed was adapted to keep the gauge of the film.

The blow up ratio (BUR) was fixed at 2.5:1. The die diameter was 120 mm. The frost line height was maintained at about 45 cm above the die. The cooling air temperature was maintained at 17 °C.

The extrusion results are summarised in Table V.

TABLE V.

| Resin | Pressure (bar) | Tm (°C) | Q[b] (kg/h) | Power (Amp) | P/Q (bar/kg/h) |
|---|---|---|---|---|---|
| R1 | 230 | 221 | 41.0 | 27 | 5.6 |
| R2[a] | 220 | 221 | 27.7 | 20 | 7.9 |
| R4 | 308 | n.a. | 41.4 | 37 | 7.4 |
| R5 | 320 | 228 | 43.5 | 38 | 7.4 |
| R6 | 312 | 223 | 33.5 | 34 | 9.3 |

[a] Resin R2 contained 600 ppm of Dynamar FX9613 produced by Dyneon as polymer processing additive. In addition all resins contained antioxidants.
Q[b] represents the throughput: it was estimated from the winding speed and measured film thickness.
n.a. means "not available".

The extrusion pressure of the resins according to the present invention is about 20 % lower than that of the comparative resins and the extrusion power of the resins according to the present invention, as measured by the current

consumption, is about 25 % lower than that of the comparative resins. This can be explained by the difference in rheology characterised by a higher fluidity at high shear rate.

The resulting films had a thickness of 25 microns or of 40 microns and they were tested for optical properties, impact strength (dart), tear strength in machine and transverse directions, for stiffness and for hot tack force.

A first series of films had a thickness of 40 microns: their properties are summarised in Table VI.

TABLE VI.

| | R1 | R4 | R5 | R6 |
|---|---|---|---|---|
| MWD | 2.6 | 2.6 | 2.4 | 4.2 |
| DRI | 36 | 0 | 0.7 | 0.8 |
| Activation energy (kJ/mole) | 30 | | | 30 |
| SIST | Single peak | Single peak | broad | Single peak |
| Haze (%) | 4.3 | 4.2 | 15 | 11 |
| Tear MD (N/mm) | 98 | 130 | 170 | 186 |
| Tear TD (N/mm) | 180 | 150 | 135 | 240 |
| Sec. Mod. (Mpa) | 190 | 190 | 200 | 200 |
| Dart (g) | >1200 | >1200 | >1200 | 350 |
| Extrusion on LDPE machine | Yes | No | no | No |

The activation energy is calculated from Arrhenius fit on complex viscosity curves measured at 170, 190 and 210 °C. It must be noted that the activation energy of the resins according to the present invention is very low. It is similar to that of conventional LLDPE that typically is about 30 kJ/mole.

SIST means Stepwise Isothermal Segragation Technique. It is a measure of the homogeneity of the comonomer repartition in the chain. In this technique, the sample is heated from room temperature (25 °C) to 220 °C at a rate of 200 °C/min. It is kept at 220 °C for 5 minutes. The temperature is then dropped to 140 °C at a rate of 20 °C/min and kept at that level for 40 minutes. The temperature is then dropped by steps of 5 °C at a rate of 20 °C/min and kept at each step for 40 minutes until the temperature of 90 °C is reached. It is then allowed to cool down to 25 °C at the fastest cooling rate and maintained at 25 °C for 3 minutes. It is next reheated from 25 °C to 180 °C at a rate of 5 °C/min. The percentage of crystallisation is deduced from the curve representing the short chain branching (SCB) as a function of melting temperature following the method described by Satoru Hosada in Polymer Journal, vol. 20, p. 383, 1988. Figure 2 represents the SIST results for resins R2 and R5.

Figure 2 is a graph of the percentage in fusion peak as a function of short chain branches, these being represented by the number of $CH_3$ chains per 1000 carbon atoms.

The impact was measured as the Dart impact dropped from a height of 66 cm as measured following the method of standard test ASTM D 1709-98.

The haze was measured with the Byk-Gardner Hazegard® system.

The rigidity of the film was derived from secant modulus that was measured following the method of standard test ASTM D 882-00 using a traction of 5 mm/min on a 250 mm sample.

The tear strength was measured in the machine direction (MD) and in the transverse direction (TD) with the Elmendorf test.

It can be observed from that table that the resin R1 according to the present invention matches the good optical and mechanical properties of the prior art resins but offers in addition excellent extrusion capabilities on conventional LDPE extrusion equipment.

The shrink properties have been measured in an oil bath at 130 °C during 2 minutes in machine direction (MD) and transverse direction (TD) for resins R1 and R4: they are reported in Table VII.

TABLE VII.

| | R1 | R4 |
|---|---|---|
| Shrink MD | 59 % | 28 % |

TABLE VII. (continued)

| | R1 | R4 |
|---|---|---|
| Shrink TD | 4 % | -3 % |

The resin according to the present invention has remarkable shrink properties as compared to resins of the prior art.

The sealing performance of the resin R1 according to the present invention and of the prior art resins R5 and R6 is reported in Table VIII. It is measured by the hot tack force expressed in Newtons (N) at different temperatures ranging from 95 °C to 145 °C.

TABLE VIII.

| Temperature °C | R1 | R5 | R6 |
|---|---|---|---|
| 95 | 0 | 0.26 | 0 |
| 100 | 0.33 | 1.53 | 0.66 |
| 105 | 1.04 | 4.55 | 0.87 |
| 110 | 4.36 | 4.13 | 2.06 |
| 115 | 3.99 | 5.89 | 2.75 |
| 120 | 4.27 | 2.57 | 2.83 |
| 125 | 3.75 | 0 | 0 |
| 130 | 3.81 | 0 | 0 |
| 135 | 3.46 | 0 | 0 |
| 140 | 2.38 | 0 | 0 |
| 145 | 2.03 | 0 | 0 |

At temperatures higher than 120 °C, the inventive resin clearly outperforms all the prior art resins that have completely lost all sealing properties. In addition, it must be noted that resin R5 seals at lower temperature than R1 because it has a lower density than R1. Resin R2 that has a density similar to that of R5 also starts sealing at the same low temperature as R5, but it further has the broad sealing range of resin R1.

A second set of films had a thickness of 25 microns: their properties are summarised in Table IX.

TABLE IX.

| | R1 | R2 | R4 | R5 | R6 |
|---|---|---|---|---|---|
| MWD | 2.6 | 2.6 | 2.6 | 2.4 | 4.2 |
| DRI | 36 | 52 | 0 | 0.7 | 0.8 |
| SIST | Single peak | Single peak | Single peak | Broad | Single peak |
| Haze % | 5 | 2.8 | 3.8 | 11.5 | 7 |
| Dart (g) | 175 | 500 | 430 | 710 | 210 |
| Tear MD (N/mm) | 200 | 210 | 220 | 290 | 400 |
| Tear TD (N/mm) | 475 | 475 | 375 | 305 | 560 |
| Sec. Mod. (Mpa) | 138 | 80 | 180 | 100 | 125 |
| Extrusion stability | Excellent | excellent | not good | not good | good |

Resin R4 has been considered as the ideal resin available on the market in terms of optical properties. It can be seen from Table IX that the resins of the present invention match and even slightly outperform resin R4.

The dart impact resistance of the present resin is quite comparable to that of resin R4 and slightly inferior to that of resin R5. It must be noted that the density of the resin has a strong influence on the dart impact strength: it decreases with increasing density as can be observed by comparing the performances of resins R1 and R2. The dart impact strength of films prepared from low density resins having a melt index of about 1 g/10 min can be larger than 1200 g.

The Elmendorf tear resistance is slightly lower than that of other resins but it is still quite acceptable.

It can be concluded that the resins according to the present invention offer an ideal compromise of properties: optical, mechanical, shrink, sealing and extrudability.

**Claims**

1. A linear low density polyethylene having a density of from 0.906 to 0.940 g/cm$^3$, a melt index MI2 of from 0.001 to 150 g/10 min and a DRI larger than 20/MI2.

2. The linear low density polyethylene according to claim 1 wherein the molecular weight distribution is of less than 4.

3. The linear low density polyethylene according to claim 1 or claim 2 prepared with a catalyst having a metallocene or a late transition metal catalyst component.

4. The linear low density polyethylene according any one of the preceding claims wherein the density is of from 0.914 to 0.925 g/cm$^3$, the melt index MI2 is of from 0.1 to 10 g/10 min, the DRI is larger than 30/MI2 and the molecular weight distribution is less than 3.5.

5. Process for preparing the linear low density polyethylene according to any one of claims 1 to 4 comprising the steps of:

   a) providing a metallocene or a late transition metal catalyst component;
   b) activating the catalyst component of step a) with a cocatalyst having an ionising action;
   c) providing a metal alkyl cocatalyst having a scavenging action;
   d) adding the ethylene and a comonomer to the reaction zone;
   e) retrieving the mLLDPE.

6. The process according to claim 5 wherein the metallocene catalyst component is a bis(tetrahydro-indenyl) component.

7. The process according to claim 6 wherein the metallocene catalyst component is ethylene bis(4,5,6,7-tetrahydro-1-indenyl) zirconium dichloride.

8. The process according to any one of claims 5 to 7 wherein the activating cocatalyst having an ionising action is methylalumoxane.

9. The process according to any one of claims 5 to 8 wherein the cocatalyst having a scavenging action is an aluminiumalkyl.

10. The process according to any one of claims 5 to 9 wherein the cocatalyst having a scavenging action is triisobutylaluminium.

11. The process according to any one of claims 5 to 10 wherein the polymerisation is carried out in slurry phase.

12. The process according to any one of claims 5 to 11, wherein the comonomer is hexene.

13. Use of the linear low density polyethylene of any one of claims 1 to 4 to prepare blown films having good optical and mechanical properties.

14. Use of the linear low density polyethylene according to any one of claims 1 to 4 to improve the extrusion parameters in blown films applications.

**15.** Use of the linear low density polyethylene of any one of claims 1 to 4 to produce films having good sealing properties.

**16.** Films prepared with the linear low density polyethylene according to any one of claims 1 to 4.

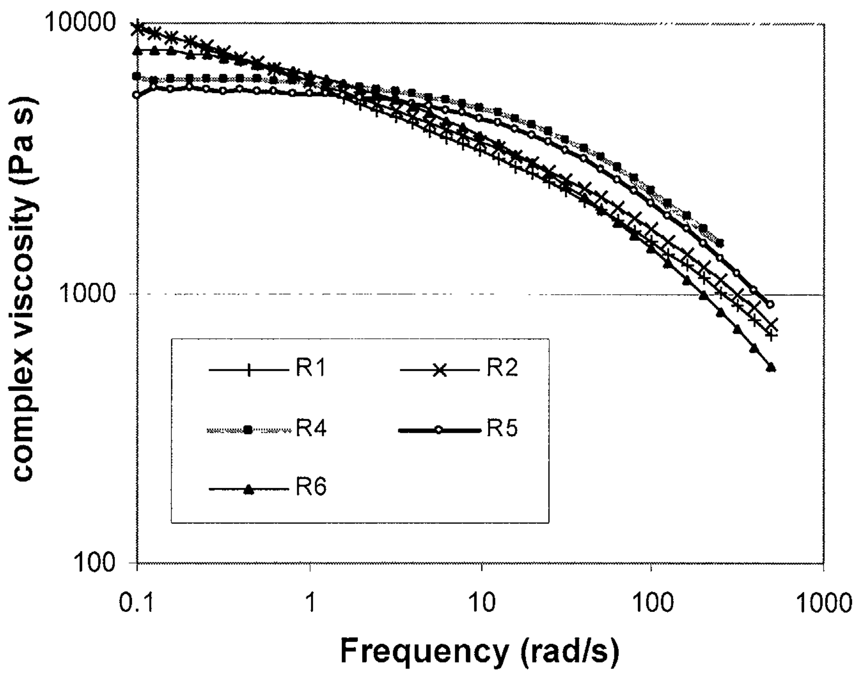
10000
1000
100
complex viscosity (Pa s)
0.1
1
10
100
1000
Frequency (rad/s)
R1
R2
R4
R5
R6

Figure 1.

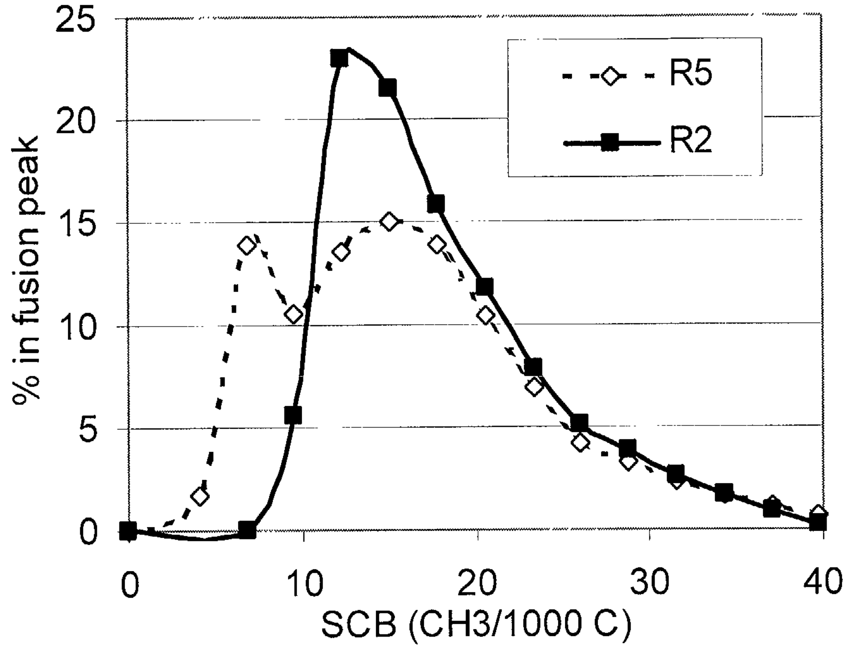


Figure 2.

European Patent Office

# EUROPEAN SEARCH REPORT

Application Number
EP 01 20 4358

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 09096 A (LAI SHIH YAW ;KOCH KAELYN D (US); DOW CHEMICAL CO (US); JAIN PRADE) 25 February 1999 (1999-02-25) * page 13, line 28 - page 14, line 28 * * page 34, line 20 - line 24 * * claims; examples 5-9 * --- | 1-5,8-16 | C08F210/16 C08J5/18 C08F4/64 |
| D,A | WO 96 35729 A (FINA RESEARCH ;RAZAVI ABBAS (BE); DEBRAS GUY (BE)) 14 November 1996 (1996-11-14) * claims; examples * --- | 5-12 | |
| D,A | WO 95 27005 A (MOBIL OIL CORP) 12 October 1995 (1995-10-12) * page 3, line 3 - page 7, line 8; claims * --- | 1-16 | |
| A | WO 93 12151 A (EXXON CHEMICAL PATENTS INC) 24 June 1993 (1993-06-24) * the whole document * --- | 1-4 | TECHNICAL FIELDS SEARCHED (Int.Cl.7) |
| A | US 5 001 205 A (HOEL ELVIN L) 19 March 1991 (1991-03-19) * column 6, line 13 - line 51 * * column 7, line 16 - line 30; claims * ----- | 5-12 | C08F C08J |

The present search report has been drawn up for all claims

| Place of search | Date of completion of the search | Examiner |
|---|---|---|
| THE HAGUE | 19 April 2002 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 01 20 4358

This annex lists the patent family membersrelating to the patent documents cited in the above-mentioned European search report.
The members are as contained in the European Patent Office EDP file on
The European Patent Office is in no way liable for these particulars which are merely given for the purpose of information.

19-04-2002

| Patent document cited in search report | | Publication date | Patent family member(s) | | | Publication date |
|---|---|---|---|---|---|---|
| WO 9909096 | A | 25-02-1999 | AU | 8480898 | A | 08-03-1999 |
| | | | BR | 9811608 | A | 05-09-2000 |
| | | | CN | 1267315 | T | 20-09-2000 |
| | | | EP | 1003812 | A1 | 31-05-2000 |
| | | | JP | 2001515114 | T | 18-09-2001 |
| | | | NO | 20000723 | A | 14-02-2000 |
| | | | TR | 200000397 | T2 | 21-06-2000 |
| | | | WO | 9909096 | A1 | 25-02-1999 |
| | | | ZA | 9806281 | A | 17-01-2000 |
| WO 9635729 | A | 14-11-1996 | AT | 200496 | T | 15-04-2001 |
| | | | DE | 69612494 | D1 | 17-05-2001 |
| | | | DE | 69612494 | T2 | 27-09-2001 |
| | | | DK | 830395 | T3 | 06-08-2001 |
| | | | WO | 9635729 | A1 | 14-11-1996 |
| | | | EP | 0830395 | A1 | 25-03-1998 |
| | | | ES | 2157445 | T3 | 16-08-2001 |
| | | | JP | 11504970 | T | 11-05-1999 |
| | | | PT | 830395 | T | 30-10-2001 |
| WO 9527005 | A | 12-10-1995 | AU | 686370 | B2 | 05-02-1998 |
| | | | AU | 2228795 | A | 23-10-1995 |
| | | | CA | 2180012 | A1 | 12-10-1995 |
| | | | CN | 1145082 | A | 12-03-1997 |
| | | | EP | 0753026 | A1 | 15-01-1997 |
| | | | JP | 9511273 | T | 11-11-1997 |
| | | | WO | 9527005 | A1 | 12-10-1995 |
| | | | ZA | 9502648 | A | 30-09-1996 |
| WO 9312151 | A | 24-06-1993 | CA | 2125480 | A1 | 24-06-1993 |
| | | | DE | 69220675 | D1 | 07-08-1997 |
| | | | DE | 69220675 | T2 | 23-10-1997 |
| | | | EP | 0616618 | A1 | 28-09-1994 |
| | | | ES | 2109473 | T3 | 16-01-1998 |
| | | | JP | 7501845 | T | 23-02-1995 |
| | | | WO | 9312151 | A1 | 24-06-1993 |
| | | | US | 5475075 | A | 12-12-1995 |
| US 5001205 | A | 19-03-1991 | US | 4871705 | A | 03-10-1989 |
| | | | AU | 631550 | B2 | 03-12-1992 |
| | | | AU | 3645989 | A | 21-12-1989 |
| | | | BR | 8902914 | A | 01-02-1990 |
| | | | CN | 1042160 | A | 16-05-1990 |
| | | | DE | 68915616 | D1 | 07-07-1994 |
| | | | DE | 68915616 | T2 | 15-09-1994 |
| | | | EP | 0347128 | A1 | 20-12-1989 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 01 20 4358

This annex lists the patent family membersrelating to the patent documents cited in the above-mentioned European search report.
The members are as contained in the European Patent Office EDP file on
The European Patent Office is in no way liable for these particulars which are merely given for the purpose of information.

19-04-2002

| Patent document cited in search report | Publication date | Patent family member(s) | Publication date |
|---|---|---|---|
| US 5001205 A | | ES 2053991 T3 | 01-08-1994 |
| | | JP 2084407 A | 26-03-1990 |

EPO FORM P0459

For more details about this annex : see Official Journal of the European Patent Office, No. 12/82